Europäisches Patentamt

European Patent Office

Office européen des brevets

(19)

(11) **EP 0 486 365 B1**

(12) **FASCICULE DE BREVET EUROPEEN**

(45) Date de publication et mention
de la délivrance du brevet:
**17.09.1997 Bulletin 1997/38**

(51) Int Cl.⁶: **G06K 7/10**

(21) Numéro de dépôt: **91402989.7**

(22) Date de dépôt: **07.11.1991**

(54) **Dipositif de télécommunications par ondes électromagnétiques**

Vorrichtung für Telekommunikationen durch elektromagnetische Wellen

Device for telecommunications by electromagnetic waves

(84) Etats contractants désignés:
**AT BE CH DE ES GB GR IT LI LU NL SE**

(30) Priorité: **16.11.1990 FR 9014290**

(43) Date de publication de la demande:
**20.05.1992 Bulletin 1992/21**

(73) Titulaire: **THOMSON-CSF SEMICONDUCTEURS SPECIFIQUES**
**75008 Paris (FR)**

(72) Inventeurs:
• **Camiade, Marc**
**F-92045 Paris la Défense (FR)**
• **Serru, Véronique**
**F-92045 Paris la Défense (FR)**

• **Geffroy, Dominique**
**F-92045 Paris la Défense (FR)**

(74) Mandataire: **Courtellemont, Alain et al**
**THOMSON-CSF-S.C.P.I.,**
**13, Avenue du Président**
**Salvador Allende**
**94117 Arcueil Cédex (FR)**

(56) Documents cités:
**EP-A- 0 324 564       EP-A- 0 449 720**
**FR-A- 2 474 204       US-A- 4 242 663**
**US-A- 4 654 658       US-A- 4 656 472**

• **PATENT ABSTRACTS OF JAPAN, vol. 14, no.**
**288 (E-943), 21 juin 1990; & JP-A-02 090 746**

## Description

La présente invention concerne un système de transmission de données par modulation-démodulation d'une onde hyperfréquence, pour communication bidirectionnelle entre une station fixe, dite balise ou lecteur, et une station mobile, dite badge ou répondeur. Plus précisément, l'invention concerne le modem (modulateur-démodulateur) du badge portable, dont l'impédance d'antenne est adaptée ou désadaptée selon que le modem fonctionne, respectivement, en détecteur ou en répondeur aux signaux émis par la station fixe. Les variations d'adaptation d'impédance sont obtenues en faisant varier les tensions de polarisation d'un transistor du modem.

Ce type d'échange de données trouve ses applications dans le contrôle de mobiles, tel qu'identification de wagons sur une voie, d'automobiles à un péage ou de piétons à une entrée d'immeuble. La station mobile ou badge se présente comme une carte à puce, et elle doit être extrêmement économe en énergie, car elle est alimentée par de petites piles dites "boutons".

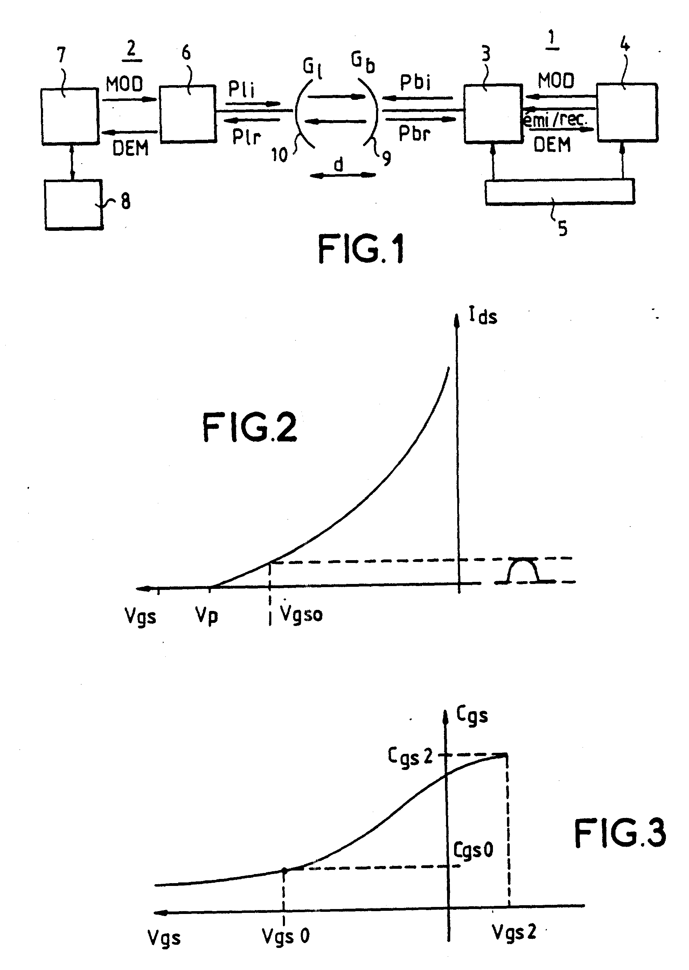

Le schéma d'ensemble d'un système d'échange de données par hyperfréquence, selon l'art connu, est assez simple, et la figure 1 qui le représente permet d'en préciser les éléments, et les sigles utilisés.

Une station mobile ou badge 1 comprend une partie hyperfréquence 3, une partie traitement de l'information 4 et une alimentation 5. Les échanges entre ces deux parties concernent la modulation-démodulation et les commandes émission/réception.

La station fixe ou balise 2 comprend une source hyperfréquence, une partie hyperfréquence 6, une partie de traitement de l'information 7, et un calculateur 8 qui permet de gérer l'ensemble des échanges radioélectriques effectués avec les badges, par l'intermédiaire des antennes 9 pour chaque badge et 10 pour la balise ou lecteur.

On utilisera

- d = distance entre les antennes 9 et 10
- $G_l$ = gain de l'antenne 10 du lecteur 2
- $G_b$ = gain de l'antenne 9 du badge 1
- $P_{li}$ = puissance émise à l'antenne du lecteur 2
- $P_{lr}$ = puissance reçue par l'antenne du lecteur
- $P_{bi}$ = puissance émise à l'antenne du badge 1
- $P_{br}$ = puissance reçue par l'antenne du badge

Les modulations utilisées dans ces systèmes sont généralement de type OOK (On-Off Keying) en modulation d'amplitude, de type PSK (Phase Shift Keying) en modulation de phase ou du type FSK (Frequency Shift Keying) en modulation de fréquence.

Le fonctionnement du modem n'est pas le même selon que la balise interroge le badge, ou que le badge répond à la balise.

Dans le sens de l'interrogation du badge 1 par le lecteur 2, celui-ci génère ($P_{li}$) un signal hyperfréquence

modulé. Le badge reçoit ce signal ($P_{br}$)et le démodule : c'est une étape qui permet d'activer le badge qui était à l'état de veille.

Dans le sens de la réponse du badge 1 au lecteur 2, le lecteur génère alors un signal hyperfréquence non modulé. Le badge reçoit ce signal, le module - c'est à dire le charge des informations au sujet desquelles il a été interrogé - et réémet un signal comportant suivant le cas, soit des pertes, soit du gain.

Les circuits électriques utilisés pour réaliser la fonction hyperfréquence (modem) du badge peuvent être de différents types.

Les circuits actifs comportent la particularité de fournir de la puissance aux fréquences microondes de la porteuse - de l'ordre de 1 à 100 GHz -, ils ont donc du gain à ces fréquences, et utilisent un transistor polarisé. Ces circuits sont généralement utilisés lors de la réémission d'un signal du badge vers le lecteur.

Les circuits semi-actifs ne fournissent aucune puissance aux fréquences microondes de la porteuse, pour lesquelles ils n'ont pas de gain, mais ont cependant du gain aux fréquences de démodulation, de l'ordre de 40 kHz à 1 MHz, ou plusieurs MHz, mais pas en GHz. Ces circuits sont intéressants pour augmenter la sensibilité de détection du badge.

Il existe également des circuits passifs, utilisant des diodes, commutateurs... etc, qui ne présentent aucun gain ni aux fréquences microondes de la porteuse (>1 GHz) ni aux fréquences de démodulation (<1 GHz). Ces circuits ont une sensibilité faible pour commander le circuit 4 de traitement de l'information, tout au moins dans le cas d'un badge portatif, puisqu'il y a un problème d'énergie fournie par de petites piles "boutons" : ces circuits sont donc moins performants pour la détection.

La condition nécessaire, pour que la transmission du lecteur vers le badge, ou interrogation, soit opérationnelle est :

$$P_{br} = P_{li} \cdot G_l \cdot G_b \left(\frac{\lambda}{4 \pi d}\right)^2 > P_{br\,min}$$

avec

$\lambda$ = longueur d'onde de la porteuse.
$P_{br\,min}$ = puissance minimale de déclenchement du modem du badge, dans le sens démodulation.

De façon générale, il n'y a pas de problèmes de puissance pour le lecteur, puisque c'est une station fixe qui peut disposer de toute l'énergie requise.

La condition nécessaire pour que la transmission du badge vers le lecteur, ou réponse, soit opérationnelle est :

$$P_{lr} = P_{li} \cdot G^2_l \cdot G^2_b \left(\frac{\lambda}{4 \pi d}\right)^4 \cdot G \, mod > P_{lr\,min}$$

avec

$G_{mod}$ :    perte ou gain apporté par le modem du badge au cours de la modulation de la porteuse émise par le lecteur.

$P_{lrmin}$ = puissance minimale de déclenchement de la chaine de démodulation du lecteur.

Il a été dit que le badge ne dispose que de sources d'énergie faibles, et qu'il convient d'économiser par une consommation limitée.

Selon l'invention, la majeure partie de la puissance $P_{bi}$ émise par le badge -ou plus exactement réémise par le badge- provient de la puissance $P_{li}$ émise par le lecteur, aux gains d'antennes 9 et 10 près.

En effet, le fondement de l'invention réside en un circuit de modem de badge qui se comporte en circuit semi-actif de démodulation, au cours de l'interrogation du badge par le lecteur, et en circuit passif de modulation d'écho, au cours de la réponse du badge au lecteur. Le circuit selon l'invention est donc semi-actif en réception, et passif en réémission.

Ce résultat est obtenu en modifiant l'impédance caractéristique, ou adaptation, de l'antenne du modem du badge. Adaptée en réception, elle a une grande sensibilité de détection, et commande le circuit de traitement du signal du badge, qui a son tour envoie les signaux de désadapation d'antenne pour la réémission. Désadaptée en émission, l'antenne réfléchit la porteuse microonde émise par le lecteur, avec cependant une modulation du coefficient de réflexion, ce qui fait que l'onde réémise en écho est modulée par le badge.

Cette modulation, c'est à dire la variation d'adaptation de l'antenne est acquise au prix d'une faible consommation d'énergie car elle se fait par une variation des tensions de polarisation d'un transistor.

Il est à noter par ailleurs que ce fonctionnement en émission qui consiste à agir sur les tensions de polarisation d'un transistor pour effectuer une désadaptation d'antenne afin de moduler le coefficient de réflexion selon deux états, l'un réflectif, l'autre adapté, est connu par la demande de brevet EP-A-0324564 ; mais, dans cette demande de brevet, le circuit qui comporte ce transistor ne permet pas un fonctionnement en réception.

De façon plus, précise, l'invention consiste en un dispositif de télécommunication par ondes électromagnétiques, tel que décrit dans la revendication 1 ci-jointe.

Il est aussi à remarquer que dans le document EP-A-0 449 720 qui n'a été publié que le 02.10.1991, il est question d'un dispositif de télécommunication par ondes électromagnétiques qui présente certaines analogies et des différences certaines avec le dispositif revendiqué en particulier dans la revendication 1 du présent document. Dans les deux documents un transistor est commuté entre deux états et dans le premier état qui correspond au mode réception le transistor fonctionne en détecteur d'amplitude. Mais, dans le second état qui correspond au mode émission, un signal qui a été reçu sur une première antenne du dispositif selon le document EP-A-0 449 720, est amplifié et modulé par ledit transistor avant d'être réémis sur une seconde antenne. A l'inverse, dans le présent document, il n'y a pas amplification d'un signal reçu ; en effet par variation d'une tension de polarisation dudit transistor une variation d'impédance dudit transistor est obtenue et cette variation d'impédance produit une désadaptation modulée de l'antenne d'émission-réception et donc une modulation du coefficient de réflexion de cette antenne; ceci revient à dire que, en émission, dans le document EP-A-0 449 720 le dispositif reçoit un signal, et le module et l'amplifie avant de le retransmettre alors que dans le présent document le dispositif ne reçoit et n'émet pas, à proprement parler, de signal mais réfléchit un signal sur une antenne à coefficient de réflexion modulé. Un tel fonctionnement du dispositif selon l'invention conduit certes à un signal en émission nettement plus faible qu'avec un dispositif selon le document EP-A-0 449 720 mais ce n'est pas une gêne quand des applications, telles que les badges portables, sont visées, applications où les portées d'émission sont très courtes, en pratique au plus égales à quelques mètres ; par contre dans ce type d'applications un tel fonctionnement présente un énorme avantage comparée aux fonctionnements avec amplification: il nécessite très peu d'énergie, ce qui est primordial en particulier avec un badge portable.

L'invention sera mieux comprise par l'exposé plus détaillé qui suit maintenant du fonctionnement du modem du badge appuyé sur deux exemples de réalisations, et sur les figures jointes en annexe, qui représentent :

-    figure 1 : schéma d'ensemble simplifié d'un système d'échange de données, qui a été décrit plus haut,
-    figure 2 : courbe I(V) d'un transistor, tel qu'utilisé en détecteur dans l'invention,
-    figure 3 : courbe C(V) d'un transistor, tel qu'utilisé en modulateur dans l'invention,
-    figure 4 : schéma simplifié du circuit détecteur selon l'invention,
-    figure 5 : schéma du circuit de badge hyperfréquence selon l'invention, en réalisation hybride.
-    figure 6 : schéma du même circuit, en réalisation intégrée.

Dans le système d'échange de données par ondes électromagnétiques selon l'invention, le badge - c'est la partie la plus délicate à réaliser en raison de la source d'énergie-comprend un unique circuit hyperfréquence 3 qui se comporte de façon différente selon qu'il est interrogé ou qu'il répond.

Dans le sens du lecteur 2 vers le badge 1 - interrogation par le lecteur - le lecteur émet une onde hyperfréquence modulée en amplitude : la fonction détecteur de niveau du badge est réalisée au moyen d'un composant non linéaire qui est un transistor. Le modem 3, qui fonctionne à ce moment en démodulateur, restitue l'enveloppe du signal émis par le lecteur, l'amplifie si nécessaire et l'adresse au circuit de traitement de l'information 4.

La figure 2 représente la courbe $I_{ds}$, en fonction de $V_{gs}$ pour un transistor à effet de champ. Si ce transistor est polarisé sur sa grille à une tension $V_{gs0}$ proche de sa tension de pincement $V_p$, ce point de polarisation, à très faible courant de quelques microampères, est intéressant car le transistor fonctionne en détecteur d'amplitude à la fréquence de la porteuse - de l'ordre de 1 à 100 GHz - et de plus avec une forte sensibilité, La non linéarité du courant $I_{ds}$ en fonction de la tension $V_{gs}$ explique ce phénomène de détection. Mais en outre, le transistor à effet de champ est un composant actif qui présente du gain aux fréquences de démodulation, de l'ordre de 40 kHz à 1 MHz, qui sont de basses fréquences par rapport à la porteuse - 1 à 100 GHz -. On peut même adjoindre au détecteur de niveau un amplificateur, mais la sensibilité obtenue au moyen d'un seul transistor est de l'ordre de 60 mV/μW à 10 GHz, pour un courant de 3 à 5 μA.

Dans le sens du badge 1 vers le lecteur 2, ou réponse par le badge, c'est encore le lecteur qui émet une onde hyperfréquence, ou porteuse, non modulée, et le badge répond en modulant cette porteuse, réfléchie vers le lecteur. Le modem 3 fonctionne à ce moment en modulateur, et la fonction modulation de la porteuse par le badge est assurée par la variation de l'adaptation de l'antenne 9. Bien entendu, les signaux qui adaptent ou désadaptent l'antenne 9 sont émis par le circuit 4 de traitement de l'information, activé par la phase précédente d'interrogation.

La porteuse est modulée en amplitude selon une modulation de type OOK - On-Off-Keying - c'est à dire entre deux états logiques : pour simplifier le langage, convenons d'appeler "bas" un premier état logique, et "haut" un second état logique, mais le fonctionnement du circuit demeure si les états "haut" et "bas" sont inversés, réciproquement.

L'état logique "bas" de la modulation de porteuse est réalisé en adaptant l'antenne en impédance, c'est à dire que la puissance qu'elle réfléchit vers le lecteur est nulle : $P_{bi} \simeq 0$. L'état logique "haut" est obtenu en désadaptant fortement l'antenne, de façon qu'elle réfléchisse le maximum de puissance de la porteuse : $P_{bi} \simeq P_{br}$, aux pertes près.

L'état logique "bas", dans lequel l'antenne ne réfléchit pas la porteuse est obtenu en choisissant comme tension de polarisation de grille $V_{gs}$, la tension $V_{gs0}$ pour laquelle le transistor fonctionne en démodulateur. Le transistor n'a rien à démoduler, mais l'antenne est adaptée en impédance et la puissance réfléchie est nulle.

A cette première tension de polarisation $V_{gs}0$ correspond une première capacité grille-source $C_{gs0}$, qui est faible, comme le montre la courbe de la figure 3, représentant la variation de capacité grille-source $C_{gs}$ en fonction de la variation de polarisation grille-source $V_{gs}$.

L'état logique "haut", dans lequel l'antenne désadaptée en impédance réfléchit la porteuse, est obtenu en modifiant la tension grille-source $V_{gs}$ du transistor. On utilise pour désadapter l'antenne la variation de capacité de jonction grille-source en fonction de la tension de polarisation grille-source, et l'état logique "haut" est obtenu en polarisant la jonction grille-source en direct, à $V_{gs2}$, ce qui correspond selon la figure 3 à une forte capacité équivalente $C_{gs2}$. L'antenne est fortement désadaptée en impédance, et réfléchit toute la puissance incidente - aux pertes près -. A titre d'exemple non limitatif $V_{gs0} = -1$ V et $V_{gs2} = + 0,6$ V.

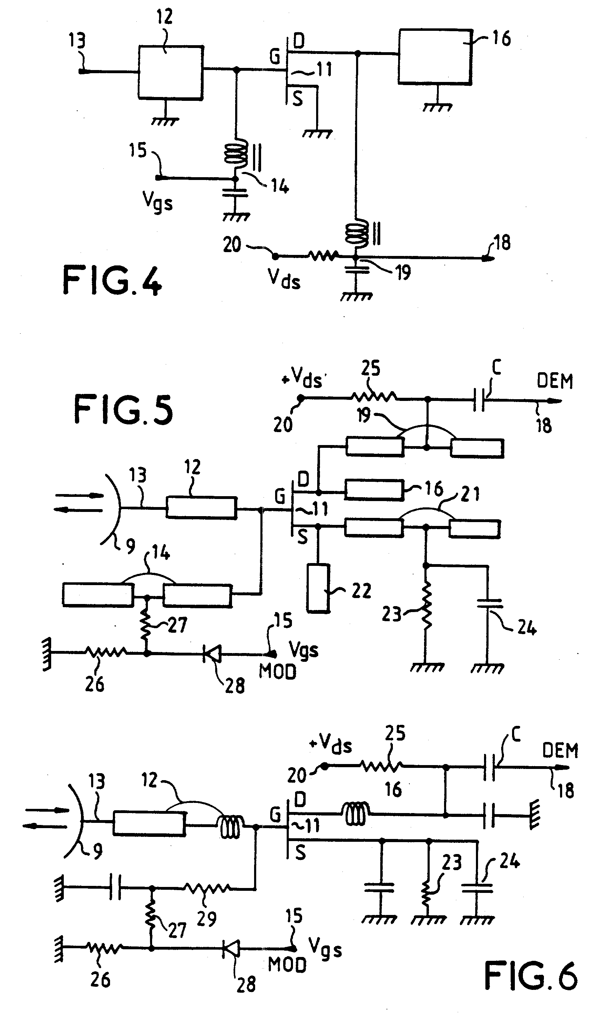

La figure 4 donne le schéma électrique simplifié du circuit de modem 3, selon l'invention. Il comprend au moins un transistor à effet de champ 11 : bien entendu, le modem peut comporter d'autres transistors, mais assurant des fonctions différentes de charge, d'amplification, de commutation etc.. . . Un réseau d'adaptation 12 est branché entre la grille du transistor et l'entrée hyperfréquence 13, qui est l'antenne 9 de la figure 1. Ce réseau d'adaptation 12 tient compte de l'impédance de source, équivalente à une mise à la masse. Un filtre en 14 filtre les tensions de polarisations $V_{gs}$, sur la borne 15, qui font passer le circuit de l'état démodulateur à l'état modulateur. Sur le drain du transistor sont placés une charge hyperfréquence 16 et un filtre passe-bas 19 qui délivre en 18 un signal de sortie en démodulation d'amplitude.

Les deux figures suivantes donnent les schémas de réalisation du modem 3 du badge, en composants discrets et technologie hybride dans le cas de la figure 5, et en circuit intégré monolithique dans le cas de la figure 6.

Le circuit de la figure 5 est donc réalisé sur un substrat isolant sur lequel sont rapportés des composants discrets tels que transistor, diode, résistances en pavés, ou déposées des lignes microbandes, trop encombrantes pour qu'un tel circuit puisse être intégré.

Les mêmes indices de repères qu'en figure 4 permettent d'identifier les composants ou les fonctions. On peut cependant préciser que :

- les lignes 14,19 et 21 sont de type quart d'onde et servent à découpler les alimentations de polarisations,
- la ligne 22 est de type quart d'onde et permet de mettre la source du transistor 11 à la masse, à la fréquence porteuse,
- sur la source du transistor est une résistance 23 d'autopolarisation : ce procédé permet une forte insensibilité du courant de polarisation drain-source $I_{ds}$ en fonction de la tension de pincement $V_p$ du transistor,
- la capacité 24, en parallèle sur la résistance 23, permet de mettre la source à la masse aux fréquences de modulation et de démodulation,
- sur le drain, la résistance 25 de polarisation a une forte valeur, de l'ordre de 100 k Ω, ce qui donne une forte sensibilité en détection, optimisée par la ligne 16,

- sur la grille, les résistances 26 et 27 et la diode 28 permettent la polarisation de la grille de façon modulée, à l'aide d'une tension ± V appliquée sur la borne 15. Si V est positif, la grille est polarisée en positif à travers la résistance de limitation 27 (fonctionnement du circuit en modulateur). Si V est négatif, la grille est à 0V puisqu'aucun courant ne passe, mais la source est autopolarisée par la résistance 23 à $V_{GS0} \simeq - 1V$.

Ce circuit hyperfréquence comporte en outre une borne de sortie 18, découplée par une capacité C : les signaux détectés au cours de la démodulation sont adressés au circuit de traitement 4 (fig. 1) qui répond en adressant sur la borne 15 des signaux modulés, qui adaptent ou désadaptent l'impédance d'antenne, ce qui module la porteuse réfléchie vers le lecteur 2.

Ce circuit hybride présente l'inconvénient qu'il doit être rapporté sur un substrat rigide et réuni à des puces de circuits intégrés pour le traitement de l'information, telles que des puces de microprocesseur ou de mémoires.

Le circuit intégré dont le schéma est donné en figure 6 présente l'avantage qu'il peut n'être qu'une partie d'un circuit intégré plus complexe, comprenant les circuits de commande, ce qui rend le badge monolithique, à l'exception de quelques composants trop volumineux pour être intégrables : microbande d'adaptation 12, et les réseaux RC 23+24 et 25+C.

Dans ce circuit, les réseaux d'adaptation d'impédance de grille et de drain sont des selfs, que l'on sait intégrer, bien que la grille nécessite cependant une ligne microruban.

La résistance 29 sur la polarisation de grille permet d'élargir la bande de fréquences de fonctionnement.

Les capacités non repérées sont des capacités de découplage aux hyperfréquences.

L'équivalence des fonctions, mise en évidence par les mêmes indices de repères, entre les figures 5 et 6 est évidente pour l'homme de l'art, qui y reconnaît les deux formes d'un même modem de badge hyperfréquences.

## Revendications

1. Dispositif de télécommunication par ondes électromagnétiques, pour l'échange de données entre une station fixe, dite lecteur (2), et une station mobile, dite badge (1) qui comprend au moins un circuit modem (3), ou modulateur/démodulateur, relié à une antenne (9) d'émission/réception, dont, en émission, la désadaptation d'impédance module le coefficient de réflexion de l'onde porteuse émise par le lecteur (2), par la commande d'au moins un transistor (11) entre deux états, ce dispositif étant caractérisé en ce que, en émission, la désadaptation de l'impédance d'antenne (9) est obtenue par une variation de la capacité de jonction grille-source $C_{gs}$ du transistor (11), cette variation étant obtenue par une variation de la tension de polarisation Vgs du transistor, et en ce que ce même transistor assure également la fonction détection dans le circuit modem (3), le circuit modem comportant pour cela un réseau d'adaptation (12) branché entre l'antenne et la grille du transistor, un circuit de polarisation grille (14) à deux états (Vgs0, Vgs2), une charge hyperfréquence (16) reliée à la première électrode du transistor et un circuit de polarisation (19) de la première électrode du transistor, la première électrode du transistor étant couplée à travers son circuit de polarisation à la sortie de réception du circuit modem, la deuxième électrode du transistor étant reliée à un point à potentiel fixe.

2. Dispositif selon la revendication 1, caractérisé en ce que les stations mobile (1) et fixe (2) communiquent par microondes, dans une bande de 1 à 100 GHz.

## Patentansprüche

1. Vorrichtung zum Nachrichtenverkehr über elektromagnetische Wellen für den Datenaustausch zwischen einer Feststation (2) und einer beweglichen Station (1), auch Badge genannt, die mindestens eine Modemschaltung (3), auch Modulator/Demodulator genannt, enthält, welche an eine Sende-Empfangsantenne (9) angeschlossen ist, die durch Impedanzfehlanpassung in Senderichtung den Reflexionskoeffizienten des von der Feststation (2) ausgesendeten Trägers aufgrund der Steuerung mindestens eines Transistors (11) zwischen zwei Zuständen moduliert, dadurch gekennzeichnet, daß in Senderichtung die Fehlanpassung der Impedanz der Antenne (9) durch eine Veränderung der Kapazität ($C_{gs}$) des Gate-Source-Übergangs des Transistors (11) erhalten wird, wobei sich diese Veränderung durch eine Veränderung der Vorspannung $V_{gs}$ des Transistors ergibt, und daß dieser gleiche Transistor auch die Detektorfunktion in der Modemschaltung (3) gewährleistet, wobei die Modemschaltung hierzu ein Anpassungsnetz (12), das zwischen die Antenne und das Gate des Transistors eingefügt ist, eine Gate-Vorspannungsschaltung (14) mit zwei Zuständen ($V_{gs0}$, $V_{gs2}$), eine Mikrowellenlast (16), die an die erste Elektrode des Transistors angeschlossen ist, und eine Vorspannungsschaltung (19) für die erste Elektrode des Transistors enthält, und wobei die erste Elektrode des Transistors über ihre Vorspannungsschaltung an den Empfangsausgang der Modemschaltung gekoppelt ist, während die zweite Elektrode des Transistors an einen Punkt mit festem Potential angeschlossen ist.

2. Vorrichtung nach Anspruch 1, dadurch gekennzeichnet, daß die bewegliche Station (1) und die Feststation (2) über Mikrowellen in einem Frequenzband von 1 bis 100 GHz verkehren.

## Claims

1. Telecommunication device using electromagnetic waves, for the exchange of data between a fixed station, called a reader (2), and a mobile station, called a badge (1), which includes at least one modem circuit (3), or modulator/demodulator, connected to a transmission/ reception antenna (9), the impedance mismatch of which, in transmission, modulates the reflection coefficient of the carrier wave transmitted by the reader (2), by controlling at least one transistor (11) between two states, this device being characterized in that, in transmission, the mismatch in the impedance of the antenna (9) is obtained through a variation in the gate-source junction capacitance $C_{gs}$ of the transistor (11), this variation being obtained through a variation in the bias voltage Vgs of the transistor, and in that this same transistor also affords the detection function in the modem circuit (3), the modem circuit including for this purpose a matching network (12) wired up between the antenna and the gate of the transistor, a gate bias circuit (14) with two states (Vgs0, Vgs2), a UHF load (16) connected to the first electrode of the transistor and a bias circuit (19) for the first electrode of the transistor, the first electrode of the transistor being coupled through its bias circuit to the reception output of the modem circuit, the second electrode of the transistor being connected to a point at fixed potential.

2. Device according to Claim 1, characterized in that the mobile (1) and fixed (2) stations communicate by microwaves, in a band from 1 to 100 GHz.

**FIG.1**

**FIG.2**

**FIG.3**

FIG.4

FIG.5

FIG.6